# EUROPÄISCHE PATENTSCHRIFT

(11) **EP 1 270 946 B1**
(45) Veröffentlichungstag und Bekanntmachung des Hinweises auf die Patenterteilung: **18.10.2006**
(21) Anmeldenummer: 02020791.6
(22) Anmeldetag: 17.09.2002
(51) Int. Cl.: F04C 13/00, F04C 15/00, F04C 2/14, B29C 47/50, B29C 47/82

(54) **Vorrichtung mit einer Zahnradpumpe und einem Direktantrieb sowie eine Extrusionsanlage**
Device, like an extrusion machine, comprising a direct driven gear pump
Dispositif, tel une extrudeuse, comprenant une pompe à engrenages à entraînement direct

(43) Veröffentlichungstag der Anmeldung: 02.01.2003
(73) Patentinhaber: Maag Pump Systems Textron AG, 8154 Oberglatt (CH)
(72) Erfinder: Heinen, Michael, 8049 Zürich (CH); Pokladek, Thomas, 40885 Ratingen-Lintorf (DE); Triebe, René, 8051 Zürich (CH)
(74) Vertreter: Troesch Scheidegger Werner AG

(56) Entgegenhaltungen:
- EP-A- 0 822 336
- EP-A- 0 848 478
- DE-A- 3 111 794
- DE-A- 19 942 567
- US-A- 5 577 899
- US-A- 6 036 453
- US-B1- 6 376 954

## Beschreibung

Die vorliegende Erfindung betrifft eine Vorrichtung nach dem Oberbegriff des Patentanspruchs 1 sowie eine Extrusionsanlage mit der Vorrichtung.

Insbesondere bei der Herstellung von Kunststofffolien kommen sowohl Extruder als auch Zahnradpumpen, und zwar einzeln als auch in Kombination, zum Einsatz. Dabei wird ein Polymer mit Hilfe der Extruder und/oder der Zahnradpumpen durch einen Spritzkopf gepresst, der entsprechend einer herzustellenden Form des Extrudates ausgebildet ist. Gerade bei der Herstellung von Folien und dünnen Platten sind die Anforderungen an das Extrudat bezüglich Toleranzen sehr hoch, so dass dort vermehrt eine, in besonderen Fällen auch mehrere Zahnradpumpen in einer Anlage zum Einsatz kommen.

Bei der Verarbeitung von Kunststoffen, insbesondere zur Herstellung von Folien oder dünnen Platten, ist zu beachten, dass die Fliesslänge für das zu verarbeitende Material möglichst kurz gehalten wird. Entsprechend sind die Anlagen zur Verarbeitung der Kunststoffe möglichst kurz auszubilden. Als Folge davon müssen die verwendeten Anlagekomponenten, d.h. Zahnradpumpen und Extruder inkl. deren Antriebe und dazugehörenden Komponenten wie Gelenkwellen und notwendige Getriebe, auf engstem Raum angeordnet werden. Dabei ist der Umstand als zusätzlich limitierend anzusehen, dass der oberhalb der Anlageebene an sich zur Verfügung stehende Raum nicht bzw. nur eingeschränkt benutzt werden darf, weil die einzelnen Komponenten der Anlage einer unzulässig hohen Temperatur ausgesetzt würden, welche aufgrund einer für die Verarbeitung des Extrudates benötigten erhöhten Temperatur durch Abstrahlung entsteht. Daraus folgt, dass alle, zumindest aber der überwiegende Teil der Anlagekomponenten in und unterhalb der Anlageebene angeordnet werden müssen. Entsprechend ist die Platzproblematik hierdurch weiter verschärft, und zusätzliche Vorkehrungen sind zu treffen, damit die zulässigen Höchsttemperaturen bei den Anlagekomponenten nicht überschritten werden. Dies ist insbesondere bei Coextrusionsanlagen der Fall, bei denen mehrere Extruder vorhanden sind.

Es hat sich gezeigt, dass - auch wenn die maximal zulässigen Höchsttemperaturen bei den einzelnen Anlagekomponenten nicht überschritten werden - durch die erhöhte Temperatur die Lebensdauer der einzelnen Komponenten herabgesetzt ist, zumindest aber, dass die Wartungsintervalle kürzer sein müssen, damit sich die Lebensdauer der Komponenten nicht erheblich verkürzt.

Aus CH-659 290 ist eine Zahnradpumpe bekannt, bei der eine oder beide Wellen aus dem Pumpengehäuse heraus geführten sind und die je über einem so genannten Direktantrieb angetrieben werden. Der Direktantrieb unterscheidet von einem herkömmlichen Antrieb dadurch, dass sich zwischen der angetriebenen Welle und dem Direktantrieb kein Getriebe vorgesehen ist. Der Vorteil gegenüber früheren Lösungen, bei denen Getriebe zwischen dem Antrieb und der Welle vorgesehen waren, besteht darin, dass durch das weggelassene Getriebe mehr Platz für die übrigen Anlagekomponenten frei wird, bzw. es können die ohnehin engen Platzverhältnisse besser ausgenutzt werden.

Aus der US-6 036 453 und der DE 197 23 988 A1 ist eine Zahnradpumpe mit einem Direktantrieb bekannt, bei dem die Welle durch den Rotor geführt ist. Dabei ist die Welle jeweils ausserhalb und beidseits des Motorgehäuses mit einem Lager abgestützt. Auch diese bekannte Lehre weist eine verhältnismässig grosse Bauform aus.

Der vorliegenden Erfindung liegt die Aufgabe zugrunde, eine Vorrichtung anzugeben, welche den engen Platzverhältnissen weiter Rechnung trägt, mithin eine kompaktere Bauweise erlaubt.

Diese Aufgabe wird durch die im kennzeichnenden Teil des Patentanspruchs 1 angegebenen Massnahmen gelöst. Vorteilhafte Ausgestaltungen der Erfindung sowie eine Extrusionsanlage sind in weiteren Ansprüchen angegeben. Die Erfindung weist die folgenden Vorteile auf: Indem der Rotor der Antriebseinheit einen Hohlraum zur Aufnahme einer aus dem Gehäuse nach aussen geführten Welle aufweist, wird eine äusserst kompakte Bauweise von Zahnradpumpe und Antriebseinheit erreicht. Insbesondere in axialer Richtung kann durch diese Erfindung eine Verkürzung der Baulänge einer Zahnradpumpen-Antriebskombination erreicht werden.

Durch die äusserst kompakte Bauweise ergibt sich zusätzlich der Vorteil, dass die Elastizität des gesamten Antriebsstranges minimiert wird. Die erhöhte Steifheit des Antriebsstranges hat insbesondere zur Folge, dass die Laufruhe und die Gleichmässigkeit der Rotation zunehmen. Davon profitieren insbesondere Anwendungen, bei denen eine sehr hohe Anforderung an die Gleichmässigkeit der Förderung gestellt wird, wie dies beispielsweise bei der Folienextrusion mit engen Toleranzen oder bei der Ummantelung von HF-Kabeln der Fall ist.

Die Erfindung wird nachfolgend anhand von Zeichnungen beispielsweise näher erläutert. Dabei zeigen:
- Fig. 1,: in schematischer Darstellung, eine bekannte Vorrichtung mit einer Zahnradpumpe, bei der beide Wellen mit einem Direktantrieb angetrieben werden,
- Fig. 2,: wiederum in schematischer Darstellung, eine Ausführungsform, die kein Ausführungsbeispiel der Erfindung darstellt einer Vorrichtung, bei der ein Rotor eines Direktantriebes eine nach aussen geführte Welle vollständig umfasst,
- Fig. 3,: wiederum in schematischer Darstellung, eine erste Ausführungsform der erfindungsgemässen Vorrichtung, bei der in einem Hohlraum des Rotors zusätzlich ein Kupplungselement angeordnet ist, und
- Fig. 4: eine Detailansicht eines Übergangbereiches zwischen Pumpengehäuse und Direktantrieb bei einer weitere Ausführungsform der Erfindung.

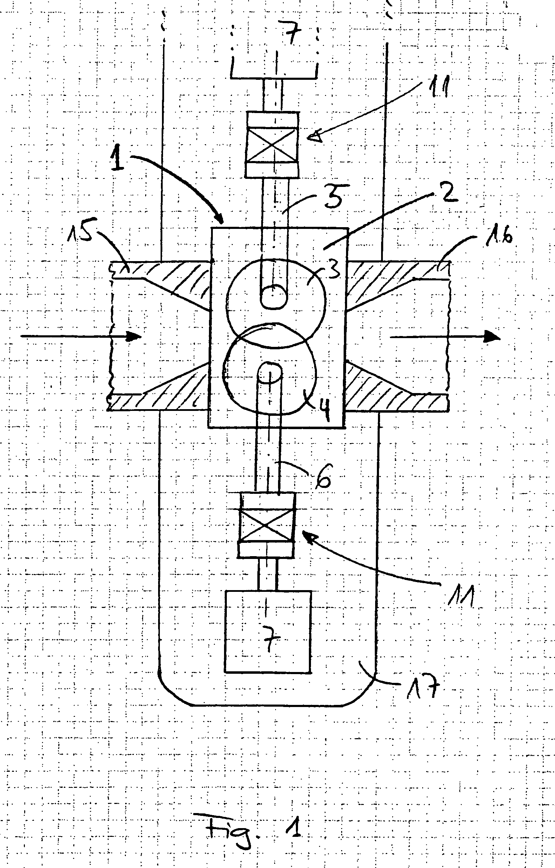

Fig. 1 zeigt in schematischer Darstellung eine bekannte Vorrichtung, wie sie im Detail in CH-659 290 offenbart ist, wobei eine Zahnradpumpe 1 vorgesehen ist, bestehend aus zwei ineinandergreifenden Zahnrädern 3 und 4 in einem Gehäuse 2 mit einem saugseitigen und einem druckseitigen Flanschelement 15 bzw. 16, und einem getriebelosen Direktantrieb 7, der direkt mit einer durch das Gehäuse 2 hindurchgeführten Welle 5 wirkverbunden ist, auf der eines der Zahnräder 3, 4 der Zahnradpumpe 1 befestigt ist.

Wie aus Fig. 1 ersichtlich ist, ist zwischen dem Direktantrieb 7 und der Zahnradpumpe 1 ein Kupplungselement 11 vorgesehen, über das der Direktantrieb 7 mit der Zahnradpumpe 1 bzw. mit der aus dessen Gehäuse 2 herausgeführten Welle 5 oder 6 verbunden ist. Beim Kupplungselement 11 handelt es sich um eine drehsteife Verbindung, welche beispielsweise die Demontage der betroffenen Zahnradpumpe 1 bzw. des betroffenen Direktantriebes 7 erleichtern soll. Ein Getriebe zwischen dem Direktantrieb 7 und der Zahnradpumpe 1 ist nicht vorgesehen.

Im Übrigen sind sowohl die Zahnradpumpe 1 als auch die Direktantriebe 7 fix mit einem Ständerelement 17 verbunden.

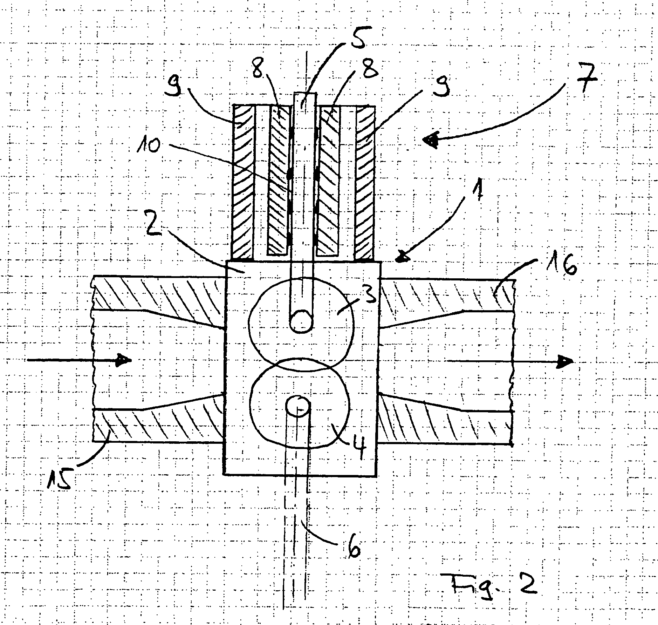

In Fig. 2 ist, wiederum in einer schematischen Darstellung, eine Ausführungsform einer Vorrichtung dargestellt, bestehend aus der Zahnradpumpe 1, dem saug- und druckseitigen Flansch 15 bzw. 16 und dem Direktantrieb 7. Der Direktantrieb 7 ist am Gehäuse 2 der Zahnradpumpe 1 befestigt und treibt die aus dem Gehäuse 2 nach aussen geführte Welle 5 der Zahnradpumpe 1 an.

Damit der innere Aufbau des Direktantriebes 7 deutlich sichtbar wird, ist dieser in Fig. 2 in einem Schnitt durch die Rotationsachse der Welle 5 dargestellt. Bewegt man sich im Direktantrieb 7 ausgehend von der Welle 5 in radialer Richtung nach aussen, so ist zunächst ein Rotor 8 mit entsprechender Rotorwicklung, sofern es sich um einen elektrischen Antrieb handelt, als zylinderförmiger Körper vorhanden. Nach einem gewissen, Toleranzen und Durchbiegungen aufnehmenden Spalt ist ein Stator 9 mit entsprechender Statorwicklung vorgesehen, wobei der Stator 9 auf der der Zahnradpumpe 1 zugewandten Stirnseite mit dem Gehäuse 2 fest verbunden ist. Wie der Rotor 8 weist auch der Stator 9 eine Zylinderform auf. Während der Stator 9 mittels Schraubverbindungen oder dergleichen mit dem Gehäuse 2 der Zahnradpumpe 1 verbunden ist, ist der Rotor 8 beispielsweise in einem Schrumpfprozess auf die Welle 5 aufgeschrumpft. Selbstverständlich sind auch andere Verbindungsarten, wie beispielsweise Kleben, oder denkbar. Eine besonders vorteilhafte Verbindung zwischen dem Rotor 8 und der Welle 5 wird dadurch erreicht, dass der Rotor 8 auf die Welle 5 aufgeschoben wird, wobei ein kleines Spiel zwischen dem Rotor 8 und der Welle 5 vorgesehen ist, um den Rotor 8 einfach auf die Welle 5 aufschieben zu können, und wobei des weiteren eine Passfeder vorzusehen ist, um ein Rutschen zwischen Rotor 8 und Welle 5 zu verhindern.

In einer weiteren Ausführungsform ist ferner denkbar, dass beide Wellen 5 und 6 durch das Gehäuse 2 nach aussen geführt sind und dass beide Wellen 5 und 6 über je einen Direktantrieb 7, wie er auf der Seite der Welle 5 gezeigt ist, angetrieben werden. In Fig. 2 wird dies durch eine strichlinierte Darstellung der durch das Gehäuse 2 nach aussen geführten Welle 6 angedeutet.

In einer weiteren Ausführungsform der Vorrichtung ist eine Temperiereinheit vorgesehen, welche mit einem Temperiermediumtransportsystem verbunden ist, die zum Zwecke der Temperatureinstellung im Direktantrieb 7 zu diesem geführt ist und in geeigneter Form, beispielsweise in mäanderförmiger Anordnung, um den Direktantrieb 7 bzw. den Stator 9 angeordnet ist. Damit ist im Bereich des Direktantriebes 7 die Wirkoberfläche des Temperiermediumtransportsystems vergrössert, was einen Wärmeaustausch zwischen dem im Temperiermediumtransportsystem enthaltenen Temperiermedium und dem Gehäuse des Direktantriebes 7 begünstigt. Hierdurch ist eine weitere Voraussetzung geschaffen, die erfindungsgemässe Vorrichtung in einer Umgebung einzusetzen, bei der aufgrund von eingeschränkten Platzverhältnissen, die bei den eingangs erwähnten Extruderanlagen für die Verarbeitung von Kunststoffen - insbesondere zur Herstellung von Folien oder dünnen Platten - häufig anzutreffen sind, eine erhöhte Umgebungstemperatur herrscht, welche zu einer erhöhten Abnutzung der Anlagekomponenten führt. Mit der Temperiereinheit und dem dazugehörenden Temperiermediumtransportsystem kann gemäss der Erfindung die Temperatur beim Direktantrieb 7 auf einen Wert eingestellt werden, bei dem keine Schäden infolge einer zu hohen Temperatur entstehen können.

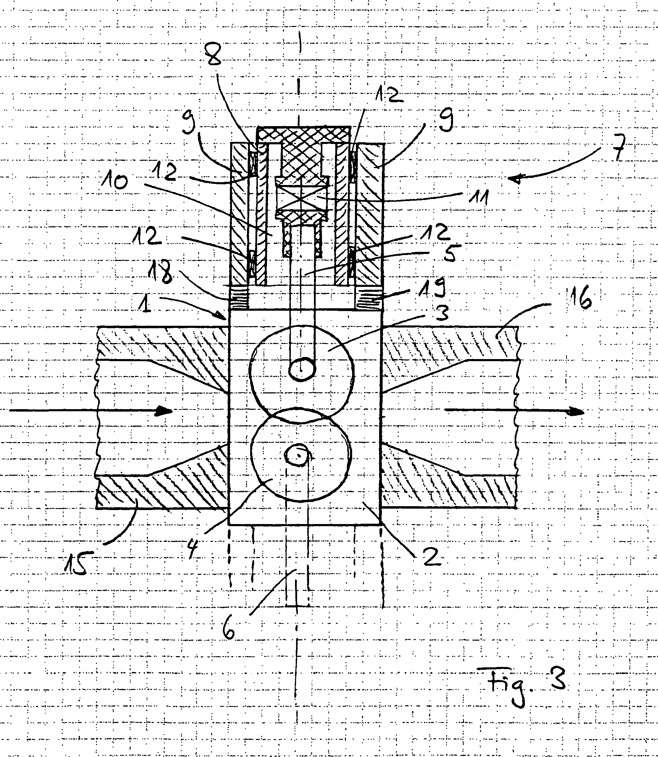

In Fig. 3 ist eine Ausführungsvariante der erfindungsgemässen Vorrichtung dargestellt, wobei der Direktantrieb 7 wiederum direkt, gegebenenfalls über Befestigungselemente 18 und 19, mit dem Gehäuse 2 der Zahnradpumpe 1 verbunden ist. Im Unterschied zur der Ausführungsform gemäss Fig. 2 füllt die nach aussen geführte Welle 5 nicht mehr vollständig einen im Innern des Rotors 8 vorhandenen Hohlraum 10 aus, sondern es weist die Welle 5 einen verglichen mit dem Durchmesser des zylinderförmigen Hohlraums 10 deutlich kleineren Durchmesser auf. Hierdurch wird Platz geschaffen, im Hohlraum 10 zusätzlich zu einem Teil der Welle 5 ein Kupplungselement 11 aufzunehmen, welches die Aufgabe hat, allfällige Belastungsdurchbiegungen, hervorgerufen durch die auf die Welle 5 wirkende Querkräfte, aufzufangen bzw. die nachfolgenden Antriebskomponenten, ausgehend von der Zahnradpumpe 1, nicht zu belasten. Als Folge davon ist der Rotor 8 nicht starr mit der Welle 5 verbunden, so dass zwischen Rotor 8 und Stator 9 Lagerelemente 12 vorzusehen sind, welche die Position von Stator 9 und Rotor 8 zueinander definieren. Als Lagerelemente 12 kommen dabei beispielsweise so genannte Wälzlager oder Nadellager zum Einsatz. Gleichzeitig wird eine äusserst kompakte Zahnradpumpe/Direktantrieb-Anordnung erhalten, welche einerseits sehr anpassungsfähig in Bezug auf Ausgleichsbewegungen der Komponenten ist, anderseits einen kleinen Luftspalt zwischen Rotor 8 und Stator 9 zulässt, was bekannterweise einen hohen Wirkungsgrad beim verwendeten Direktantrieb ermöglicht.

In Fig. 3 ist wiederum die Möglichkeit angedeutet, dass beide Wellen durch das Gehäuse der Zahnradpumpe 1 nach aussen geführt sind. Die beiden Wellen werden bei dieser Ausführungsform der Erfindung durch je einen getriebelosen Direktantrieb 7 im Sinne der vorstehenden Erläuterungen angetrieben. Zur Abstimmung der Drehzahlen und/oder der Winkellage der beiden Direktantriebe 7 ist eine Synchronisationsverbindung zwischen den Direktantrieben 7 vorgesehen. Über diese Synchronisationsverbindung werden Informationen zur Synchronisation der beiden Direktantriebe 7 ausgetauscht, wobei es beispielsweise vorgesehen ist, dass einer der Direktantriebe 7 als Master-Antrieb, welcher Vorgaben festlegt, und der andere Direktantrieb 7 als Slave-Antrieb arbeitet. Weiterführende Angaben zur Steuerung eines sogenannten Doppelantriebes können beispielsweise der schweizerischen Patentschrift mit der Veröffentlichungsnummer CH-659 290 oder der europäischen Patentanmeldung mit der Anmeldenummer 98115962.7 entnommen werden.

Im Zusammenhang mit der Erläuterung der Ausführungsform gemäss Fig. 2 wurde bereits darauf hingewiesen, dass sowohl Temperiereinheiten als auch die dazugehörenden Temperiermediumtransportsysteme bei den jeweiligen Direktantrieben 7 vorgesehen sein können.

Zur Gruppe der getriebelosen Direktantriebe gehört insbesondere der sogenannte Ringmotor (auch etwa als Transversalflussmaschine bezeichnet), welcher direkt auf der anzutreibenden Welle der Zahnradpumpe angeordnet wird. Denkbar ist auch die Verwendung der geschalteten Version des Ringmotors.

In einer weiteren Ausführungsform mit Temperiereinheiten ist vorgesehen, eine Zahnradpumpe mit Temperierkreislauf (in Fig. 2 und 3 nicht dargestellt) in der Extrusionsanlage einzusetzen und dabei das gleiche Temperiermedium des Temperiermediumtransportsystems des Direktantriebs 7 ebenfalls durch den Temperierkreislauf der Zahnradpumpe 1 fliessen zu lassen, um neben der Einstellung der Temperatur im Direktantrieb 7 auch gleichzeitig die Temperatur in der Zahnradpumpe 1 auf eine gewünschte Temperatur einstellen zu können. Hierbei wird sowohl eine Parallelschaltung des Temperierkreislaufes der Zahnradpumpe 1 mit dem Temperiermediumtransportsystem des Direktantriebes 7 als auch eine Serieschaltung als Varianten vorgeschlagen. Denkbar ist bei einer weiteren Ausgestaltung der Erfindung darüber hinaus, dass für jeden Temperierkreislauf eine separate Temperiereinheit zur Verfügung gestellt wird.

Für weiterführende Angaben zum Temperierkreislauf durch Zahnradpumpen sei stellvertretend auf die europäische Patentanmeldung mit der Veröffentlichungsnummer EP-0 822 336 verwiesen.

Wie bereits erläutert worden ist, besteht eine Ausführungsform der erfindungsgemässen Vorrichtung darin, dass der Direktantrieb 7 über Befestigungselemente 18 und 19 mit dem Gehäuse 2 der Zahnradpumpe 1 verbunden ist. Es handelt sich hierbei um eine starre Verbindung, damit der Stator 9 sich in Bezug auf das Gehäuse 2 nicht bewegen kann, ansonsten eine übermässige Belastung auf die Lagerelemente 12 bzw. auf das Kupplungselement 11 entstehen kann.

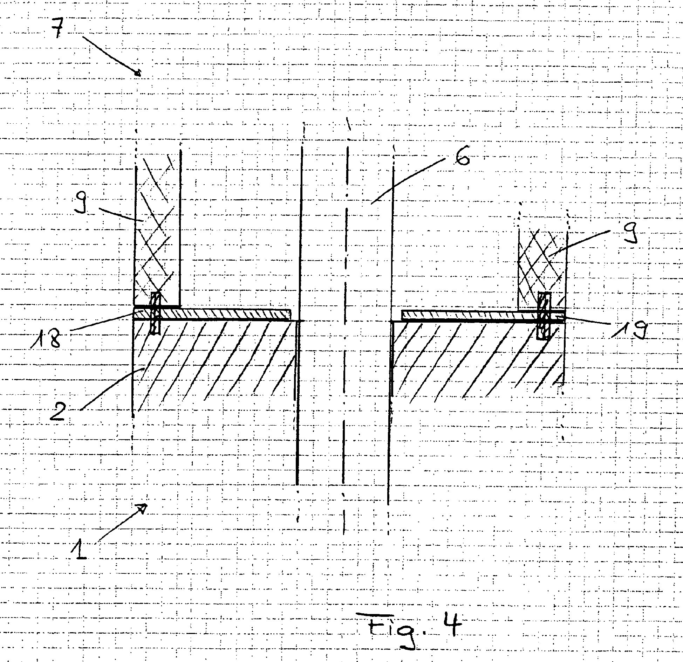

Aufgrund der vorstehend erläuterten Temperaturproblematik wird in einer weiteren, bevorzugten Ausführungsform der Erfindung mit Befestigungselementen 18, 19 vorgeschlagen, ein Wärme-isolierendes Material für diese Befestigungselemente 18, 19 zu verwenden. Damit wird in vorteilhafter Weise erreicht, dass ein unerwünschter Wärmefluss zwischen Direktantrieb 7 und Gehäuse 2 verhindert wird, womit die Temperatur in den einzelnen Komponenten einfacher eingestellt und überwacht werden kann. Eine solche Auführungsvariante ist in Fig. 4 dargestellt, in der lediglich ein Übergangsbereich zwischen dem Gehäuse 2 der Zahnradpumpe 1 und dem Direktantrieb 7 ersichtlich ist. Die aus Wärme-isolierendem Material bestehenden Befestigungselemente 18, 19 sind scheibenförmig und weisen in der Mitte eine Öffnung auf, durch die die Welle 6, ohne die Befestigungselemente 18, 19 zu berühren, hindurchgeführt ist. Mit anderen Worten weisen die Befestigungselemente 18, 19 gemäss Fig. 4 eine grössere radiale Ausdehnung auf als die Befestigungselemente 18, 19 gemäss Fig. 3, welche der radialen Ausdehnung des Stators 9 angepasst sind.

Während bei der Ausführungsform gemäss Fig. 3 der Wärmefluss zwischen den miteinander verbundenen Gehäuseteilen verhindert wird, wird bei der Ausführungsvariante gemäss Fig. 4 zusätzlich auch ein allfälliger Wärmefluss aufgrund einer Abstrahlung verhindert bzw. reduziert. Damit wird eine gegenüber der Ausführungsform gemäss Fig. 3 verbesserte thermische Entkopplung zwischen dem Gehäuse 2 der Zahnradpumpe 1 und dem Direktantrieb 7 erhalten.

## Patentansprüche

1. Vorrichtung mit einer Zahnradpumpe (1), bestehend aus einem Gehäuse (2) und aus zwei ineinandergreifenden Zahnrädern (3, 4), wobei mindestens eines der Zahnräder (3, 4) auf einer Welle (5, 6) angeordnet ist, die durch das Gehäuse (2) nach aussen geführt ist und die mit einem getriebelosen Direktantrieb (7) wirkverbunden ist, der aus einem Rotor (8) und einem Stator (9) besteht, und wobei der Rotor (8) einen Hohlraum (10) zur Aufnahme der nach aussen geführten Welle (5, 6) aufweist, und wobei Lagerelemente (12) zur örtlichen Fixierung des Stators (9) in Bezug auf den Rotor (8) in, ausgehend von der Welle (5, 6), radialer Richtung vorgesehen sind, **dadurch gekennzeichnet, dass** die Lagerelemente (12) zwischen Rotor (8) und Stator (9) vorgesehen sind und dass der Rotor (8) über ein flexible Kupplungselement (11) mit der nach aussen geführten Welle (5, 6) verbunden ist.

2. Vorrichtung nach Anspruch 1, **dadurch gekennzeichnet, dass** die Lagerelemente (12) Wälzlager oder Nadellager sind.

3. Vorrichtung nach Anspruch 1, **dadurch gekennzeichnet, dass** das Kupplungselement (11) im Hohlraum (10) angeordnet ist.

4. Vorrichtung nach einem der Ansprüche 1 bis 3, **dadurch gekennzeichnet, dass** das Kupplungselement (11) eine Kardankupplung, eine Lamellenkupplung oder eine Klauenkupplung ist.

5. Vorrichtung nach einem der vorangehenden Ansprüche, **dadurch gekennzeichnet, dass** der Stator (9) unmittelbar mit dem Gehäuse (2) der Zahnradpumpe (1) starr verbunden ist.

6. Vorrichtung nach einem der Ansprüche 1 bis 4, **dadurch gekennzeichnet, dass** zwischen dem Direktantrieb (7), insbesondere dem Stator (9), und dem Gehäuse (2) der Zahnradpumpe (1) mindestens ein Befestigungselement (18, 19) vorgesehen ist.

7. Vorrichtung nach Anspruch 6, **dadurch gekennzeichnet, dass** das bzw. die Befestigungselemente (18, 19) aus einem Wärme-isolierenden Material bestehen, wobei sich die Befestigungselemente (18, 19) vorzugsweise radial von der Wellen (5, 6) bis zum Stator (9) erstrecken.

8. Vorrichtung nach einem der Ansprüche 1 bis 7, **dadurch gekennzeichnet, dass** eine Temperiereinheit vorgesehen ist, welche mit mindestens einem Temperiermediumtransportsystem verbunden ist, wobei das Temperiermediumtransportsystem auf einen getriebelosen Direktantrieb (7) zur Einstellung der Temperatur im jeweiligen Direktantrieb (7) einwirkt.

9. Vorrichtung nach Anspruch 8, **dadurch gekennzeichnet, dass** das Gehäuse (2) der Zahnradpumpe (1) mit einem Temperierkreislauf versehen ist, welcher vorzugsweise entweder mit dem Temperiermediumtransportsystem in Serie oder parallel geschaltet ist.

10. Extrusionsanlage mit mindestens einer Vorrichtung nach einem der Ansprüche 1 bis 9.

11. Verwendung einer Vorrichtung nach einem der Ansprüche 1 bis 9 zum Transport von hochviskosen Medien.

## Claims

1. Device with a gear pump (1) comprising a housing (2) and two meshing gear wheels (3,4), at least one of said gear wheels (3,4) being mounted on a shaft (5,6) traversing the housing (2) to the outside and being positively coupled with a direct drive means (7) comprising a rotor (8) and a stator (9), said rotor (8) having a cavity (10) for taking up said shaft (5,6) extending to the outside and whereby bearing elements (12) are provided for locally fixing said stator (9) in relation to the rotor (8) in a radial direction from said shaft (5,6), **characterized in that** said bearing elements (12) are mounted between the rotor (8) and the stator (9) and **in that** the rotor (8) is coupled with said shaft (5,6) leading to the outside by the intermediary of a flexible coupling element (11).

2. Device according to claim 1, **characterized in that** said bearing elements (12) are roller bearings or needle bearings.

3. Device according to claim 1, **characterized in that** said coupling element (11) is arranged in said cavity (10).

4. Device according to any of claims 1 to 3, **characterized in that** said coupling element (11) is a cardan coupling, a multiple disk coupling or a jaw coupling.

5. Device according to any of the foregoing claims, **characterized in that** the stator (9) is directly and rigidly connected with the housing (2) of the gear pump (1).

6. Device according to any of claims 1 to 4, **characterized in that** at least one fastening element (18,19) is provided between said direct drive means (7), particularly said stator (9) and said housing (2) of the gear pump (1).

7. Device according to claim 6, **characterized in that** said fastening element or elements (18,19) are made of a heat-insulating material, whereby said fastening elements (18,19) extend preferably radially from said shafts (5,6) towards the stator (9).

8. Device according to any of claims 1 to 7, **characterized by** a tempering unit connected with at least one transport system for a tempering medium, whereby this transport system acts on direct drive means (7) for adjusting the temperature in the respective direct drive means (7).

9. Device according to claim 8, **characterized in that** the housing (2) of the gear pump (1) is provided with a tempering circuit which is preferably connected either in series or in parallel with said transport system for a tempering medium.

10. Extrusion installation with at least one device according to any of claims 1 to 9.

11. Use of a device in accordance with any of claims 1 to 9 for the transport of highly viscous products.

## Revendications

1. Dispositif avec une pompe à engrenages (1) comprenant un boîtier (2) et deux roues dentées qui s'engrènent (3,4), l'une au moins de ces roues (3,4) étant arrangée sur un arbre (5,6) qui passe à travers le boîtier (2) à l'extérieur et qui est accouplé opérationellement à un moyen d'entrainement direct (7) comprenant un rotor (8) et un stator (9), ledit rotor (8) présentant un évidement de réception (10) pour l'arbre passant à l'extérieur (5,6) et des éléments support (12) pour fixer localement en direction radiale, partant de l'arbre (5,6), le stator (9) par rapport au rotor (8), **caractérisé en ce que** lesdits éléments support (12) sont arrangés entre le rotor (8) et le stator (9) et **en ce que** le rotor (8) est relié avec l'arbre passant à l'extérieur (5,6) par l'intermédiaire d'un élément d'accouplement flexible (11).

2. Dispositif selon la revendication 1, **caractérisé en ce que** lesdits éléments support (12) sont formés par des paliers à roulement ou des roulements à aiguilles.

3. Dispositif selon la revendication 1, **caractérisé en ce que** l'élément d'accouplement est arrangé dans ledit évidement de réception (10).

4. Dispositif selon l'une des revendications 1 à 3, **caractérisé en ce que** l'élément d'accouplement (11) est un accouplement cardan, un accouplement à lamelles ou un accouplement à griffes.

5. Dispositif selon l'une des revendications précédentes, **caractérisé en ce que** le stator (9) est directement et rigidement relié au boîtier (2) de la pompe à engrenages (1).

6. Dispositif selon l'une des revendications 1 à 4, **caractérisé par** au moins un élément de fixation (18,19) disposé entre l'entrainement direct (7) notamment le stator (9) et le boîtier (2) de la pompe à engrenages (1).

7. Dispositif selon la revendication 6, **caractérisé en ce que** ledit au moins un élément de fixation (18,19) est en un matériau calorifuge et **en ce que** les éléments de fixation (18,19) s'étendent de préférence radialement à partir des arbres (5,6) jusqu'au stator (9).

8. Dispositif selon l'une des revendications 1 à 7, **caractérisé par** une unité de mise en équilibre de température qui est reliée avec au moins un système de transport d'un milieu de mise en équilibre de température, ce système agissant directement sur un entraînement direct (7) pour régler la température dans l'entrainement direct (7) respectif.

9. Dispositif selon la revendication 8, **caractérisé en ce que** le boîtier (2) de la pompe à engrenages (1) est muni d'un circuit pour équilibrer la température qui de préférence est branché soit en série soit en parallèle avec ledit système de transport du milieu de mise en équilibre de température.

10. Installation d'extrusion avec au moins un dispositif selon l'une des revendications 1 à 9.

11. Utilisation d'un dispositif selon l'une des revendication 1 à 9 pour le transport d'un milieu à haute viscosité.
